# EUROPEAN PATENT SPECIFICATION

(11) **EP 3 753 630 B1**
(45) Date of publication and mention of the grant of the patent: **13.10.2021**
(21) Application number: 19181128.0
(22) Date of filing: 19.06.2019
(51) Int. Cl.: B01J 3/00, B01J 19/00, B01J 19/18, B01J 4/00, B01J 8/00, B09B 3/00, D21C 5/02

(54) **METHOD AND SYSTEM FOR RECOVERING FIBERS FROM FIBROUS PRODUCTS**
VERFAHREN UND SYSTEM ZUR RÜCKGEWINNUNG VON FASERN AUS FASRIGEN PRODUKTEN
PROCÉDÉ ET SYSTÈME DE RÉCUPÉRATION DE FIBRES À PARTIR DE PRODUITS FIBREUX

(43) Date of publication of application: 23.12.2020
(73) Proprietor: The Hong Kong Research Institute of Textiles and Apparel Limited, Kowloon, Hong Kong (HK)
(72) Inventor: KEH, Edwin Yee Man, Kowloon, Hong Kong (HK); YAO, Lei, Kowloon, Hong Kong (HK); CHAN, Alex Hok Chung, Kowloon, Hong Kong (HK); LIU, Yang, Kowloon, Hong Kong (HK); LEUNG, John Kin Ming, Kowloon, Hong Kong (HK); CHAN, Jason Lap Hung, Kowloon, Hong Kong (HK); CHEN, Collin Xin, Kowloon, Hong Kong (HK); CHAN, Philip Yun Ngok, Kowloon, Hong Kong (HK); KAJIWARA, Kanji, Kowloon, Hong Kong (HK); SUZUOKA, Akihiro, Kowloon, Hong Kong (HK)
(74) Representative: Otten, Roth, Dobler & Partner mbB Patentanwälte

(56) References cited:
- WO-A2-2010/046538
- CN-A- 107 629 245
- JP-A- 2018 176 107
- US-A1- 2007 137 805

## Description

### FIELD

The present disclosure relates to a method and system for treating fibrous products (e.g., pre- and post-consumer fibrous products) by a hydrothermal reaction involving subcritical water to recover constituent fibers for material recycling.

### BACKGROUND

Environmental conservation has received considerable attention in the textile and garment industry. Physical reuse and chemical recycling of fibrous products has been an active area of ongoing research and development. However, fibrous products, such as fibers, clothes, fabrics, anti-hair clothing, etc. are typically made from composite materials containing various fibrous materials. Such composite materials can pose difficulties in separating the fiber materials, and recovering and recycling the fiber materials. Discarded fibrous products are usually treated as old clothing for reuse, or incinerated. Alternatively, chemical decomposition of the fibrous products with subcritical water has been explored as a method for recovering fibers from the fibrous products as raw materials for recycling. However, due to high energy consumption and cost, it is difficult to economically realize subcritical water-based chemical decomposition on an industrial as scale as elaborated as follows.

Reaction conditions for subcritical water decomposition of fibrous products using conventional methods and systems must be carefully controlled to avoid the formation of decomposition products that are too small in size to be reused without further processing. Such recovered fibers typically require further chemical and physical steps to reshape the afforded materials into fiber form. This reshaping process significantly reduces energy efficiency, and requires additional equipment.

If the fibrous products for chemical treatment can be treated as large solid matter, the aforementioned drawback can be at least partially solved. However, it can be difficult preparing slurries using large sized fibrous products. It is operationally and technically challenging introducing large sized fibrous product starting materials into a reaction tank at high temperature and pressure without affecting the reaction vessel conditions and the rate decomposition. Withdrawing the recovered fibers poses the same challenges. Therefore, efficient subcritical-water treatment systems capable of dealing with large solid matters are usually costly to operate. To make handling large solid matters possible, the fibrous products are divided into batches and batch-wise reaction is used to decompose the fibrous products.

Despite this, batch-type subcritical-water treatment reactors typically have the following problems. In feeding raw-material solid matters, additives and water for reaction to a reaction tank through an inlet at the top and withdrawing decomposed materials after reaction through an outlet at the bottom, it is necessary to discharge and discard the reaction water after each processing step of an individual batch. In a batch-type reactor, the reaction water is typically heated, then used in the reaction, and then cooled before disposing the reaction water in to the environment. Thus, a cooling device is typically required to assist in cooling the heated water, which is inefficient. As such, running costs cannot be reduced. Moreover, the equipment becomes large and complicated, leading to issues, such as a high equipment cost and a requirement for large space for accommodating the equipment.

It is known how to treat organic matter under subcritical-water conditions. A review of using subcritical (and supercritical) water for treating organic matters is given by Lachos-Perez, D., Brown, A.B., Mudhoo, A., Martinez, J., Timko, M.T., Rostagno, M.A., and Forster-Carneiro, T., "Subcritical and supercritical water extraction, hydrolysis, gasification and carbonization of biomass: a critical review," Biofuel Research Journal 14 (2017) 611-626, DOI: 10.18331/BRJ2017.4.2.6. Reaction of biomass with subcritical water or supercritical water gives a product that is a solid substance showing a higher a calorific value higher than fossil fuels and oils. Under alkaline conditions or in the presence of a salt, hydrolysis can proceed at a lower temperature, as disclosed in Japanese Patent Publication No. 2013-14737. Continuous reaction processing apparatuses using subcritical water and supercritical water are disclosed in Japanese Patent Applications No. 2001-347300, 2004-298692 and 2008-296192, and the like. In all cases, however, the solid matters are limited to those that form slurries with a particle size of 1 mm or less, which substantially limits their industrial application.

It is also known in the art how to treat fibers under subcritical-water conditions. However, most of the total waste discharge of fibrous products is not recycled, and most of the waste discharge is incinerated. In particular, for cellulose such as cotton fibers, which account for about half of the all textile/garment products containing a plurality of fibers like polyester (PET), most of waste discharge is incinerated due to difficulty in separating cotton fibers and PET fibers. It takes a lot of energy to incinerate mixed fibers and discharges carbon dioxide, a greenhouse gas. Therefore, there is a high environmental burden, as reported in "The recycling technique of disposable clothing and the outline of development of high value added products," (translation), authored by Ministry of Economy, Trade and Industry, Manufacturing Industry Bureau Textile Division, Asahi Kasei Fibers Corporation, published 19 November 2009.

In order to address the high environmental burden of mixed fiber waste treatment, the separation of cotton fibers from mixed fibers by treatment with subcritical water has been explored. However, similar to the incineration approach, the environmental impact is high, because it requires a lot of energy as reported in Japanese Patent Application No. 2008-255554.

Most of the clothing sold on the market is composed of mixed fibers. In separating these mixed fibers, there are only a few methods having high energy efficiency and economic viability. In one method for separating these mixed fibers, a technique for decomposing and recovering fibers by subcritical-water reaction treatment in the presence of an organic acid catalyst has been reported in Japanese Patent Application No. 2017-156921. JP-A-2018 176 107 discloses a method for hydrothermal treatment of lignin.

Nonetheless, there is still a need in the art for a technique based on batch-type subcritical-water reaction treatment for recovering fibers from fibrous products with improved energy efficiency, reduced equipment cost, and reduced demand in space.

### SUMMARY

A first aspect of the present disclosure is to provide a method for recovering fibers from fibrous products.

The method comprises the steps of: preparing or providing a reaction solution containing water for hydrolyzing the fibrous products; dividing the fibrous products into a plurality of batches, each batch consisting of a portion of the fibrous products; and processing the plurality of batches to recover the fibers.

In the step of processing the plurality of batches to recover the fibers, the following steps are included. In a first reactor selected from a plurality of hydrothermal reactors to deposit the reaction solution and an individual batch, the reaction solution is pressurized and a temperature thereof is maintained at a predetermined temperature that is predetermined to form a superheated reaction solution that contains subcritical water, whereby the individual batch is hydrolyzed to yield a collection of recovered fibers. The collection of recovered fibers is separated from the superheated reaction solution by filtering, whereby the superheated reaction solution is recovered. In a next reactor selected from the plurality of hydrothermal reactors to deposit a next batch selected from the plurality of batches where the next reactor is different from the first reactor and the next batch has not been hydrolyzed, the recovered superheated reaction solution is transferred to the next reactor for recycling the superheated reaction solution in hydrolyzing the next batch.

The collection of recovered fibers may comprise a first collection of recovered fibers in fiber form and a second collection of recovered fibers in powder form. During separating the collection of recovered fibers from the superheated reaction solution, the first and second collections of recovered fibers are further separated by a first stage of coarse filtering followed by a second stage of fine filtering.

When the recovered superheated reaction solution is transferred to the next reactor, the next reactor may be pressurized. The step of processing the plurality of batches further includes depositing the next batch into the next reactor under atmospheric pressure before the recovered superheated reaction solution is transferred to the next reactor that is pressurized. Preferably, the next batch is shredded before the next batch is deposited into the next reactor.

Preferably, the reaction solution is prepared to further contain one or more organic acids for promoting hydrolysis of the fibrous products. An individual organic acid may be selected from citric acid, oxalic acid, tartaric acid, maleic acid and acetic acid.

In one embodiment, the step of processing the plurality of batches further includes maintaining the reaction solution in the first reactor to have a pH value of 3 or less, wherein the pH value is measured when the reaction solution is at room temperature.

The predetermined temperature may be set to be between 100°C and 200°C inclusively, between 100°C and 110°C inclusively, at least 115°C, or at least 125°C.

A second aspect of the present disclosure is to provide a system for recovering fibers from fibrous products.

The system comprises a plurality of hydrothermal reactors, a filtering subsystem, a fluid subsystem and a computer control subsystem.

The plurality of hydrothermal reactors is collectively used for hydrolyzing the fibrous products to recover the fibers. An individual hydrothermal reactor is configured to pressurize a reaction solution containing water and to maintain a temperature of the reaction solution to a predetermined temperature for forming a superheated reaction solution that contains subcritical water. The superheated reaction solution is used for hydrolyzing a portion of the fibrous products deposited in the individual hydrothermal reactor to thereby form a collection of recovered fibers.

The filtering subsystem comprises one or more filters for separating the collection of recovered fibers from the superheated reaction solution by filtering. As a result, the superheated reaction solution is recovered.

The fluid subsystem is used for carrying a liquid to and from the filtering subsystem and the individual hydrothermal reactor. The liquid is the superheated reaction solution or a mixture of the superheated reaction solution and the collection of recovered fibers. The fluid subsystem comprises (a) a network of pipes connectable to the filtering subsystem and the individual hydrothermal reactor for carrying the liquid, (b) one or more valves for dynamically establishing one or more routes in the network, and (c) one or more pumps for pumping the liquid through an individual route.

The computer control subsystem comprises one or more computers for determining the one or more routes and for controlling the plurality of hydrothermal reactors and the fluid subsystem. The one or more computers are arranged and programmed to configure the fluid subsystem to transfer the recovered superheated reaction solution previously used for hydrolyzing one portion of the fibrous products in a first hydrothermal reactor to a second hydrothermal reactor different from the first hydrothermal reactor, where the first and second hydrothermal reactors are selected from the plurality of hydrothermal reactors. As such, the superheated reaction solution is recycled for use in hydrolyzing another portion of the fibrous products.

Preferably, the plurality of hydrothermal reactors consists of two reactors.

The individual hydrothermal reactor may be a subcritical water reactor.

The collection of recovered fibers may comprise a first collection of recovered fibers in fiber form and a second collection of recovered fibers in powder form. The one or more filters may include a serial cascade of a first-stage filter and a second-stage filter. The first-stage filter is configured to filter out the first collection of recovered fibers while allowing the second collection of recovered fibers to pass. The second-stage filter is configured to filter out the second collection of recovered fibers.

The one or more computers may be further arranged and programmed to organize the one or more routes as a circuit for circulating the mixture between the filtering subsystem and the individual hydrothermal reactor so as to filter out the first and second collections of recovered fibers from the mixture.

Other aspects of the present disclosure are disclosed as illustrated by the embodiments hereinafter.

### BRIEF DESCRIPTION OF THE DRAWINGS

FIG. **1** depicts a flowchart showing the steps of a process for recovering fibers from fibrous products in accordance with an exemplary embodiment of the present disclosure.
FIG. **2** depicts a system for recovering fibers from fibrous products in accordance with an exemplary embodiment of the present disclosure.
FIG. **3** depicts a hydrothermal system realized according to one embodiment of the disclosed fiber-recovering system, the hydrothermal system being used for illustrating a realization of the disclosed method in Example 1.
FIG. **4** depicts a table (Table 1) listing data related to the recovered fibers of fibrous products in Example 1.
FIG. **5** depicts a table (Table 2) listing data related to the recovered fibers against various acid species and types of fibrous products used in the treatment in Example 2.
FIG. **6** depicts a table (Table 3) listing data on treated fiber materials and recovered materials against different treatment temperatures in Example 3.

### DETAILED DESCRIPTION

As used herein in the specification and appended claims, "a fibrous product" means a product essentially formed by fibers for clothing or for manufacturing one or more downstream products intended for clothing. Examples of the fibrous product include garments, cloths, fabrics, yarns, filaments, and textiles. The fibrous product for recycling can be a pre-consumer waste material that was created during the manufacturing of clothes and garments, or post-consumer garments that are discarded by users of these garments.

A hydrothermal reactor is a reaction vessel configured to heat and pressurize a reaction solution that contains aqueous solutions and mixtures thereof to a certain temperature and a certain pressure so as to allow a reaction, e.g., hydrolysis, to carry out with one or more reactants deposited in the reaction vessel. The hydrothermal reactor may be specifically configured for setting the pressure and temperature to form subcritical water in the reaction solution so as to conduct the reaction in the presence of subcritical water. This special configuration of the hydrothermal reactor is referred to as a subcritical water reactor. Herein in the specification and appended claims, the subcritical water reactor is understood to be one type of hydrothermal reactor.

Described herein are: (1) a recycling method in which fibrous products discarded as pre-consumer wastes or post-consumer garments are decomposed and fractionated by hydrothermal reaction in the presence of subcritical water; and (2) a system having a plurality of hydrothermal reactors for realizing the recycling method.

In the recycling method, a fibrous fiber material is recovered from a fibrous product by treatment with subcritical water in the presence of one or more organic acids followed by filtering to retrieve the fibrous fiber material. Specifically, the fibrous product is hydrolyzed in the subcritical water to give the fibrous fiber material. By setting the treatment temperature to a certain predetermined one, a specific fiber material is dissolved and/or decomposed to a fine-powder state, so that the specific fiber material in powder form can be obtained by filtration to extract the fine powder.

The recycling method is performed in a system installed with at least two subcritical-water reaction vessels for conducting the heat-treatment reaction. A fibrous product to be treated is fed to a selected reaction vessel under atmospheric pressure. A reaction solution comprising water and one or more organic acids can be transferred alternately and/or successively among the reaction vessels to treat respective batches of fibrous products in the reaction vessels. The fibrous material and the decomposed fine powders in the heat-treated matter are then recovered.

By using two or more reaction vessels to transfer the reaction solution alternately and/or successively among the reaction vessels to carry out the treatment, it is possible to reuse the organic acid-containing reaction solution without discarding. Since the reaction solution, maintained at a high temperature, can be recycled without discarding and cooling, high material-utilization efficiency and high energy efficiency is achievable.

The system that implements the recycling method is realizable compactly to occupy a small space in that the cooling equipment is not required to be installed. Moreover, it is possible to implement the system with only two reaction vessels. With this specific configuration, the system can be realized further compactly.

A first aspect of the present disclosure is to provide a method for recovering fibers from fibrous products by a system. The system comprises a plurality of hydrothermal reactors. That is, the system has at least two, three, or four hydrothermal reactors.

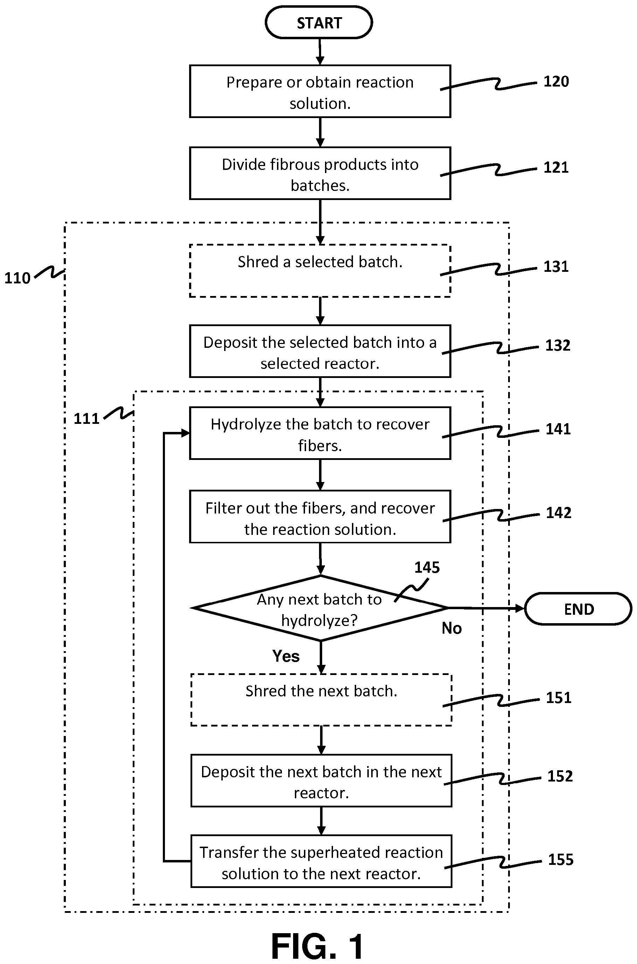

Exemplarily, the method is illustrated with the aid of FIG. **1****,** which depicts a flowchart showing steps of an exemplary method of processing the fibrous products to recover the fibers.

In a step **120,** a reaction solution for hydrolyzing the fibrous products is provided or prepared. The reaction solution comprises water. In practical situations, most of the content in the reaction solution is water. To promote hydrolysis of the fibrous products, preferably one or more organic acids are added to the reaction solution as a catalyst. The one or more organic acids are dissolved in the water of the reaction solution.

In one embodiment, an individual organic acid added to the reaction solution is selected from citric acid, oxalic acid, tartaric acid, maleic acid and acetic acid. Advantages of the aforementioned organic acids in recovering the fibers from the fibrous products are demonstrated in the examples below.

In a step **121,** the fibrous products are divided into a plurality of batches. Each batch consists of a portion of the fibrous products. The portions in the plurality of batches do not overlap. The plurality of batches is then processed in a step **110** to recover the fibers. In particular, batch-wise processing of the plurality of batches is performed in the step **110.** The step **110** includes steps **131, 132** and **111,** in which the step **111** is a recursive procedure for batch-wise processing and the step **131** is preferable though optional.

After the step **121** is performed and before any batch is processed in the step **110,** a particular batch is selected from the plurality of batches for first processing. This particular batch is referred to as an initial batch. One reactor is selected from the plurality of hydrothermal reactors for processing the initial batch. This reactor is referred to as an initial reactor. Note that the reaction solution prepared or obtained in the step **120** is deposited into the initial reactor for processing the initial batch. In one practical approach in performing the step **120,** the reaction solution is prepared in the initial reactor.

The steps **131** and **132** are preparatory steps in processing the initial batch. In the step **132,** the initial batch is deposited into the initial reactor. Generally, the deposition of the initial batch into the initial reactor can be conveniently done under atmospheric pressure. As mentioned above, it is desirable to have large solid fibrous matters preferably in slurry form in the hydrothermal treatment of the fibrous products. Before the initial batch is deposited into the initial reactor, preferably the initial batch is shredded to pieces in the step **131.** When the initial batch after shredding is deposited into the initial reactor in the step **132** and is mixed with the reaction solution, mechanical stirring provided by the initial reactor enables the initial batch to become a slurry.

After the initial batch is deposited into the initial reactor, the recursive procedure **111** is initiated for batch-wise processing of the plurality of batches. The recursive procedure **111** includes steps **141, 142, 145, 151, 152** and **155,** in which the step **151** is preferable though optional.

To illustrate the step **141,** consider a first reactor selected from the plurality of hydrothermal reactors, where the first reactor is used for depositing the reaction solution and an individual batch selected from the plurality of batches. The reaction solution is pressurized in the first reactor, and is heated to reach a predetermined temperature that is a working temperature for hydrolysis reaction to take place. Preferably, pressurization of the reaction solution is achieved by heating the reaction solution while keeping the first reactor as a closed vessel sealed off from the atmosphere. The predetermined temperature is selected such that at the predetermined temperature, the pressurized reaction solution forms a superheated reaction solution that contains subcritical water. The reaction solution's temperature is maintained at the predetermined temperature for a preselected time period, during which the individual batch is hydrolyzed to yield a collection of recovered fibers. Under some hydrolysis conditions to be elaborated further in Section C, and for some types of constituent fiber materials that form the fibrous products, the collection of recovered fibers includes a first collection of recovered fibers in fiber form and a second collection of recovered fibers in powder form.

The preselected time period may be determined according to the rate of hydrolysis and the weight of the individual batch. The weight of the individual batch indicates the amount of material required to be hydrolyzed. The rate of hydrolysis generally can depend on the temperature of the superheated reaction solution, and can also depend on the type and concentration of the one or more organic acids in the reaction solution.

The predetermined temperature may be set according to the type of fibers intended to be recovered from the fibrous products. The Examples provide more details on the selection of a suitable temperature. In certain embodiments, the predetermined temperature may be between 100°C and 200°C inclusively. The predetermined temperature may be selected to be between 100°C and 110°C inclusively, to be at least 115°C, or to be at least 125°C. Advantageously, even when the predetermined temperature is selected to be higher than 100°C, fibers of polyester, polypropylene, lycra and acrylic contained in the fibrous products can maintain their fiber shape in the collection of recovered fibers. With the predetermined temperature set at 110°C or lower, cotton and rayon contained in the fibrous products are melted and/or decomposed to fine powders in the collection of recovered fibers. With the predetermined temperature set at 115°C or higher, cotton, wool, nylon, rayon and cupra contained in the fibrous products are melted and/or decomposed to fine powders in the collection of recovered fibers. With the predetermined temperature set to 125°C or higher, cotton, wool, nylon, silk, rayon, cupra and acetate contained in the fibrous products are melted and/or decomposed to fine powders in the collection of recovered fibers.

Typically, the powders that are formed have a particle size about 0.1 to 200µm.

If pressurization of the reaction solution is done by keeping the first reactor as a closed vessel sealed off from the atmosphere and heating the reaction solution to reach the predetermined temperature, the pressure inside the first reactor is the vapor pressure of the water at the predetermined temperature. This pressure keeps the subcritical water contained in the reaction solution in liquid phase. Nonetheless, the pressurization method of the reaction solution is not restricted to the aforementioned method. The pressurization of the reaction solution may also be done by blowing heated steam into the vessel. Excess steam that gives rise to overpressure will be released out of the reactor by venting via a pressure control valve and the pressure inside the reactor will be kept as the vapor pressure of the water at the predetermined temperature.

In certain embodiments, the reaction solution in the first reactor is maintained at a pH value of 3 or less, where the pH value is measured when the reaction solution is at room temperature. Maintaining this pH value can be advantageous when the predetermined temperature is higher than 100°C and lower than 200°C. The pH value of the reaction solution is adjustable by modifying the amount of the one or more organic acids present relative to the water.

After the completion of the step **141,** the collection of recovered fibers is dispersed in the superheated reaction solution. In the step **142,** the collection of recovered fibers is separated from the superheated reaction solution by filtering. As a result, the superheated reaction solution is recovered, which can be subsequently reused for hydrolysis of another batch of fibrous products.

In case the first collection of recovered fibers in fiber form and the second collection of recovered fibers in powder form are present in the collection of recovered fibers, the first and second collections of recovered fibers may be separately obtained by a first stage of coarse filtering followed by a second stage of fine filtering. The first-stage coarse filtering extracts the first collection of recovered fibers in fiber form, and the second-stage fine filtering extracts the second collection of recovered fibers in powder form. Generally, the fiber length of recovered fiber in fiber form is about 30mm to 40mm, and the particle size of recovered fiber in powder form is about 0.1 µm to 200µm. As an example for illustration, one may select a pore size of about 30mm for realizing the coarse-filtering stage, and a pore size of less than 0.1µm for realizing the fine-filtering stage.

The step **141** is recursively performed for different batches in the plurality of batches one batch by another. When a certain batch is hydrolyzed in the first reactor, it is possible to determine whether or not in the plurality of batches, there is a next batch not yet hydrolyzed.

If it is determined (in the step **145)** that there is no more batch to be hydrolyzed, the recovery of the fibers from the plurality of batches is completed at the completion of the last round of the step **142.** The superheated reaction solution recovered in the step **142** may be discarded, or may first be cooled down before it is discarded.

In another situation, it is determined in the step **145** that the next batch waiting to be hydrolyzed is present. A next reactor different from the first reactor is selected from the plurality of hydrothermal reactors for conducting the heat treatment for the next batch.

In the step **155,** the recovered superheated reaction solution obtained in the step 142 is transferred to the next reactor so that the superheated reaction solution is recycled for hydrolyzing the next batch.

The next batch is also deposited into the next reactor in the step **152.** Practically, it is preferred that the next batch can be conveniently deposited into the next reactor under atmospheric pressure. Since the superheated reaction solution is pressurized, it is preferable and advantageous to deposit the next batch in the next reactor (the step **152)** before the next reactor is pressurized to receive the recovered superheated reaction solution (the step **155).**

As mentioned above, it is desirable to have large solid fibrous matters in slurry form in the hydrothermal treatment of the fibrous products. Similar to performing the step **131,** preferably the next batch is shredded to pieces in the step **151** before depositing the next batch into the next reactor in the step **152.**

After the steps **152** and **155** are performed, the step **141** is repeated for hydrolyzing the next batch that is deposited in the next reactor. In this manner, the recursive procedure **111** is recursively performed until all batches in the plurality of batches are processed.

Although FIG. **1** depicts that the step **120** precedes the step **121** for illustration, it is possible that the two steps **120, 121** are performed in parallel as one variation of the disclosed method. It is also possible that in another variation of the disclosed method, the step **120** is rearranged between the steps **132** and **141** in execution order. Those skilled in the art will appreciate that other variations of the disclosed method in execution order are possible provided that the rearrangement in execution order does not make each of the variations depart from the spirit of the present disclosure.

A second aspect of the present disclosure is to provide a system for recovering fibers from fibrous products. In particular, the disclosed system is configured and arranged to implement any one of the embodiments of the disclosed method according to the first aspect of the present disclosure.

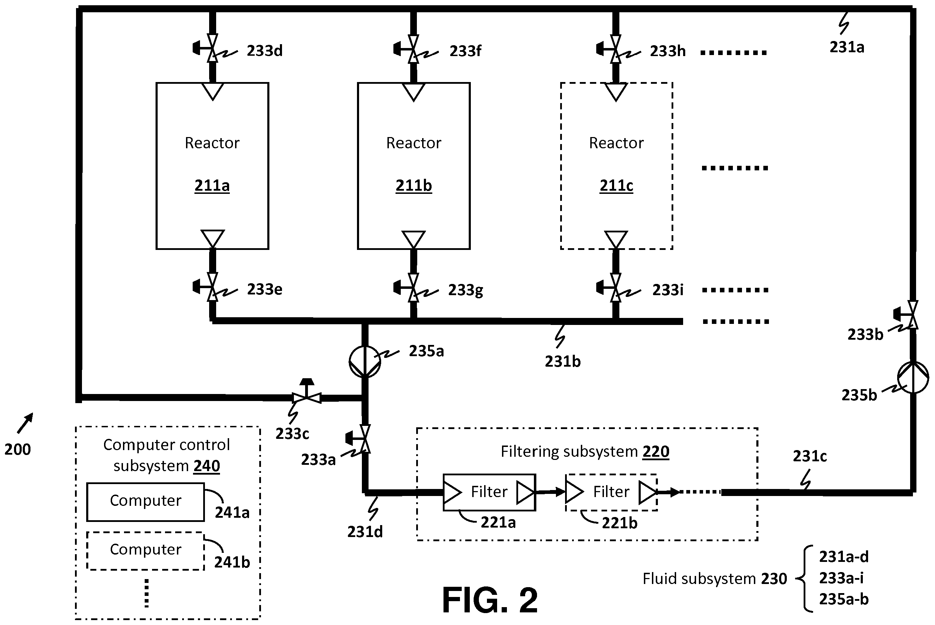

FIG. **2** depicts an exemplary realization of the disclosed system. A system **200** comprises a plurality of hydrothermal reactors **211a-c,** a filtering subsystem **220,** a fluid subsystem **230** and a computer control subsystem **240.**

The plurality of hydrothermal reactors **211a-c** is collectively used for hydrolyzing the fibrous products to recover the fibers. Although three hydrothermal reactors **211a-c** are depicted in FIG. **2** for illustration, the present invention is not limited to this number of reactors; in the present invention, there are at least two hydrothermal reactors. An individual hydrothermal reactor (also referenced as **211a-c)** is configured to pressurize a reaction solution containing water and to maintain a temperature of the reaction solution to a predetermined temperature for forming a superheated reaction solution that contains subcritical water. The superheated reaction solution is used for hydrolyzing a portion of the fibrous products deposited in the individual hydrothermal reactor **211a-c** to thereby form a collection of recovered fibers.

The filtering subsystem **220** comprises one or more filters **221a-b.** The filtering subsystem **220** is used for separating the collection of recovered fibers from the superheated reaction solution by filtering. Although two filters **221a-b** are shown in FIG. **2** for illustration, the present invention is not limited to this number of filters in realizing the one or more filters **221a-b.** As mentioned above, it is possible that the collection of recovered fibers comprises a first collection of recovered fibers in fiber form and a second collection of recovered fibers in powder form. To further separate the first collection of recovered fibers from the second one, the one or more filters **221a-b** may include a serial cascade of a first-stage filter **221a** and a second-stage filter **221b.** The first-stage filter **221a** is configured to filter out the first collection of recovered fibers while allowing the second collection of recovered fibers to pass. The second-stage filter **221b** is configured to filter out the second collection of recovered fibers.

The fluid subsystem **230** is used for carrying a liquid to and from the filtering subsystem **220** and to and from the individual hydrothermal reactor **211a-c.** The liquid is the superheated reaction solution or a mixture of the superheated reaction solution and the collection of recovered fibers. In particular, the fluid subsystem **230** comprises: a network of pipes **231a-d** connectable to the filtering subsystem **220** and the individual hydrothermal reactor **211a-c** for carrying the liquid; one or more valves **233a-i** for dynamically establishing one or more routes in the network of pipes **231a-d;** and one or more pumps **235a-b** for pumping the liquid through an individual route. Although four pipes **231a-d,** nine valves **233a-i** and two pumps **235a-b** are shown in FIG. 2 for illustration, the present invention is not limited to these numbers in respectively realizing the network of pipes **231a-d,** the one or more valves **233a-i** and the one or more pumps **235a-b.** An example of a route is a cascade of the pipes **231b** and **231d**. If the valves **233c, 233g, 233i** are closed and the valves **233a, 233e** are open, this example route connects an output of the reactor **211a** and an input of the first-stage filter **221a.** The pump **235a** is used to drive the liquid from the reactor **211a** to the first-stage filer **221a.**

The computer control subsystem **240** is used for determining the one or more routes and for controlling the plurality of hydrothermal reactors **211a-c** and the fluid subsystem **230.** The computer control subsystem **240** comprises one or more computers **241a-b.** Although two computers **241a-b** are shown in FIG. **2** for illustration, the present disclosure is not limited to this number in realizing the one or more computers **241a-b.** To achieve the advantage of reusing the superheated reaction solution, the one or more computers **241a-b** are arranged and programmed to configure the fluid subsystem **230** to transfer the recovered superheated reaction solution previously used for hydrolyzing one portion of the fibrous products in a first hydrothermal reactor (e.g., the reactor **211a)** to a second hydrothermal reactor (e.g., the reactor **211b)** different from the first hydrothermal reactor for recycling the superheated reaction solution in hydrolyzing another portion of the fibrous products.

As one example, it is desired to transfer the recovered superheated reaction solution from the first reactor **211a** to the second reactor **211b,** where the recovered superheated reaction solution has been returned back to the first reactor **211a** after filtering by the filtering subsystem **220** is done. The one or more computers **241a-b** determine that the recovered superheated reaction solution passes a route formed by the pipes **231b** and **231a.** The one or more computers **241a-b** configure the valves **233e, 233c** and **233f to** open, the valves **233d, 233g-i, 233a** and **233b** to close, the pump **235a** to switch on, and the pump **235b** to switch off.

As another example, it is desired to transfer the recovered superheated reaction solution, obtained immediately after filtering the mixture stored in the first reactor **211a,** directly from an output of the filtering subsystem **220** to the second reactor **211b.** The one or more computers **241a-b** determine to set up a first route formed by the pipes **231b** and **231d** to deliver the mixture from the first reactor **211a** to the filtering subsystem **220,** and a second route formed by the pipes **231c** and **231a** to transport the recovered superheated reaction solution from the filtering subsystem **220** to the second reactor **211b.** The one or more computers **241a-b** configure the valves **233e, 233a, 233b** and **233f to** open, the valves **233c, 233d** and **233g-i** to close, and the pumps **235a-b** to switch on.

In one option, the one or more computers **241a-b** are further arranged and programmed to organize the one or more routes as a circuit for circulating the mixture between the filtering subsystem **220** and the individual hydrothermal reactor **211a-c** so as to carry out plural rounds of filtering to more thoroughly filter out the first and second collections of recovered fibers from the mixture. As an example for illustration, it is desired to set up a (closed-loop) circuit to circulate the mixture between the filtering subsystem **220** and the reactor **211a.** A first route formed by the pipes **231b** and **231d** is used to carry the mixture from an outlet of the reactor **211a** to an input port of the filtering subsystem **220.** A second route formed by the pipes **231c** and **231a** is deployed for returning the mixture after filtering back to the reactor **211a.** The two routes are set up by opening the valves **233e, 233a, 233b, 233d** and closing the valves **233c, 233f-i.** The circuit is formed by the first and second routes. The two pumps **235a-b** are activated to circulate the mixture between the reactor **211a** and the filtering subsystem **220** through the circuit.

In realizing the system **200,** an individual computer (referenced as **241a-b)** in the computer control subsystem **240** may be located close to the plurality of hydrothermal reactors **211a-c** and the filtering subsystem **220** such that the system **200** is compactly formed to reduce the space requirement. Alternatively, the individual computer **241a-b** may be remotely located from the plurality of hydrothermal reactors **211a-c** and the filtering subsystem **220,** and remotely control the same via a communication network, wired or wireless.

Generally, cloth, clothing and/or textile materials to be treated are mainly composed of polyester and/or cotton, and other material ingredients such as polypropylene, lycra, acrylic, wool, nylon, silk, rayon, cupra, acetate and the like. According to the trend of chemical fiber production in and outside China 2017, the world's textile production volume in 2017 was estimated to be 94,771 kilotons, polyester 53,874 kilotons, cotton 25,430 kilotons, nylon 5,594 kilotons, cellulose (rayon, acetate, cupra) 5,584 kilotons, acrylic 1,199 kilotons, wool 1,167 kilotons and silk 184 kilotons. From the figures, it is seen that polyester and cotton can reach 84% of the total amount of fibers. In recycling fibers, therefore, it is realistic and desirable to consider mainly collecting polyester and cotton. Even if other fiber materials are mixed in the fibers to be recovered, they can be handled by the same treatment method.

By treating the hydrolysis of fibers at a specific reaction temperature, polyester, polypropylene, lycra, acrylic and the like contained in the treated material can be recovered while maintaining the same fiber shape as it is. Cotton, wool, nylon, silk, rayon, cupra, acetate and the like are dissolved and/or decomposed to fine powders.

As mentioned above, one or more organic acids may be included in the reaction solution for promoting hydrolysis. Although a heterogeneous organic acid may be used in preparing the reaction solution, a homogeneous organic acid is more desirable. Examples of the organic acid include, but not limited to, organic compounds having a carboxyl group (-COOH), a sulfonic acid group (-SO₃H), a phenolic hydroxyl group, an enol group, an alcohol group, or a thiol group. In particular, an organic acid having a carboxyl group is preferred. The homogeneous organic acid may be, for example, at least one acid selected from the group consisting of: acetic acid, citric acid, maleic acid, oxalic acid, tartaric acid, levulinic acid, lactic acid, ascorbic acid, formic acid, succinic acid, malonic acid, malic acid, aconitic acid, glutaric acid, adipic acid, monochloroacetic acid, oxocarboxylic acid, phenylacetic acid, toluene sulfonic acid, benzenesulfonic acid, camphor sulfonic acid; amino acids such as glutamic acid and aspartic acid; a long chain fatty acid, a short chain fatty acid, a medium chain fatty acid, and other fatty acids; and aromatic carboxylic acids, such as naphthoic acid, benzoic acid, phthalic acid, isophthalic acid, terephthalic acid, and the like.

The one or more organic acids can be present at a concentration of between 1-25 % (w/w) in reaction solution. In certain embodiments, the one or more organic acids can be present at a concentration of between 3-20, 3-19, 3-18, 3-17, 3-16, 5-15, 7-15, or 10-15 % (w/w).

The present invention is not intended to limit any choice of the individual organic acid in preparing the reaction solution in the step **120.** As mentioned above, one may select the individual organic acid from citric acid, oxalic acid, tartaric acid, maleic acid and acetic acid.

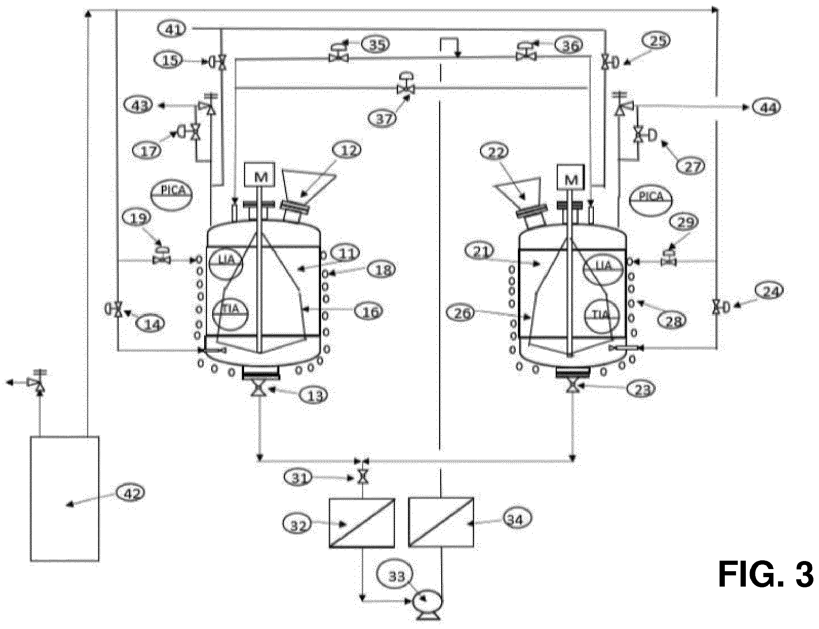

Examples of realizing the disclosed method and the disclosed system are provided hereinafter. Experimental results generated from these examples are also reported. The examples are illustrated with the aid of FIG. **3****,** which depicts an example system realized according to one embodiment of the system disclosed in the second aspect of the present disclosure.

In FIG. **3****,** the following numerals are used and explanations thereof are provided.
• **11, 21:** Subcritical water reactor.
• **12, 22:** Upper inlet.
• **13, 23:** Lower outlet.
• **14, 19, 24, 29:** Heating valve.
• **18, 28:** Coil, jacket.
• **15, 17, 25, 27, 31, 35, 36, 37:** Valve.
• **16, 26:** Stirring blade.
• **32, 34:** Filtration equipment.
• **33:** Transfer pump.
• **41:** Water supply line.
• **42:** Heat source equipment.
• **43, 44:** Vent line.

### Example 1

In the first batch, a subcritical water reactor **11** shown in FIG. **3** was set at atmospheric pressure. Clothing consisting of a blended yarn consisting of 65% polyester and 35% cotton, cut into about 10cm square from the addition port **12** was added. Next, powdered citric acid was added through the addition port **11,** and a predetermined amount of water was added from the water addition valve **15** to make an acid concentration 10% aqueous solution of pH 2. Steam was blown into the reaction tank from the heating valve **14** and reacted at a predetermined temperature and pressure.

While raising the temperature and reacting in the reaction vessel **11,** the reaction vessel **21** was set to atmospheric pressure for the second batch to deposit into. Clothing consisting of a blended yarn consisting of 65% polyester and 35% cotton, cut into about 10cm square was added via the addition port **22.** After completion of the reaction in the reaction vessel **11,** the reaction vessel **11** was self-circulated for a predetermined time from the tank lower outlet valve **13** via the filtration facility **32,** the liquid transfer pump **33,** the filtration facility **34,** and the tank **11** inlet valve **35.** After that, the valve **35** was closed and the valve **36** was opened, and the reaction solution used in the tank **11** was transferred to the tank **21.** Thereafter, fibers in fiber form are recovered from the filtration facility **32,** and fine powders are recovered from the filtration facility **34.**

While raising the temperature and reacting in the reaction vessel **21,** the reaction vessel **11** was set to atmospheric pressure for the third batch to deposit into. Clothing consisting of a blended yarn consisting of 65% polyester and 35% cotton, cut into about 10cm square was added via the addition port **12.** After completion of the reaction in the reaction vessel **21,** the reaction vessel **21** was self-circulated for a predetermined time from the tank lower outlet valve **23** via the filtration facility **32,** the liquid transfer pump **33,** the filtration facility **34,** and the tank **21** inlet valve **36.** After that, the valve **36** was closed and the valve **35** was opened, and the reaction solution used in the tank **21** was transferred to the tank **11.** Thereafter, fibers in fiber form are recovered from the filtration facility **32,** and fine powders are recovered from the filtration facility **34.**

While raising the temperature and reacting in the reaction vessel **11,** the reaction vessel **21** was set to atmospheric pressure for the fourth batch to deposit into. Clothing consisting of a blended yarn consisting of 65% polyester and 35% cotton, cut into about 10cm square was added via the addition port **22.** After completion of the reaction in the reaction vessel **11,** the reaction vessel **11** was self-circulated for a predetermined time from the tank lower outlet valve **13** via the filtration facility **32,** the liquid transfer pump **33,** the filtration facility **34,** and the tank **11** inlet valve **35.** After that, the valve **35** was closed and the valve **36** was opened, and the reaction solution used in the tank **11** was transferred to the tank **21.** Thereafter, fibers in fiber form are recovered from the filtration facility **32,** and fine powders are recovered from the filtration facility **34.**

While raising the temperature and reacting in the reaction vessel **21,** the reaction vessel **11** was set to atmospheric pressure for the fifth batch to deposit into. Clothing consisting of a blended yarn consisting of 65% polyester and 35% cotton, cut into about 10cm square was added via the addition port **12.** After completion of the reaction in the reaction vessel **21,** the reaction vessel **21** was self-circulated for a predetermined time from the tank lower outlet valve **23** via the filtration facility **32,** the liquid transfer pump **33,** the filtration facility **34,** and the tank **21** inlet valve **36.** After that, the valve **36** was closed and the valve **35** was opened, and the reaction solution used in the tank **21** was transferred to the tank **11.** Thereafter, fibers in fiber form are recovered from the filtration facility **32,** and fine powders are recovered from the filtration facility **34.**

Thereafter, the reaction was carried out alternately and continuously in a similar manner.

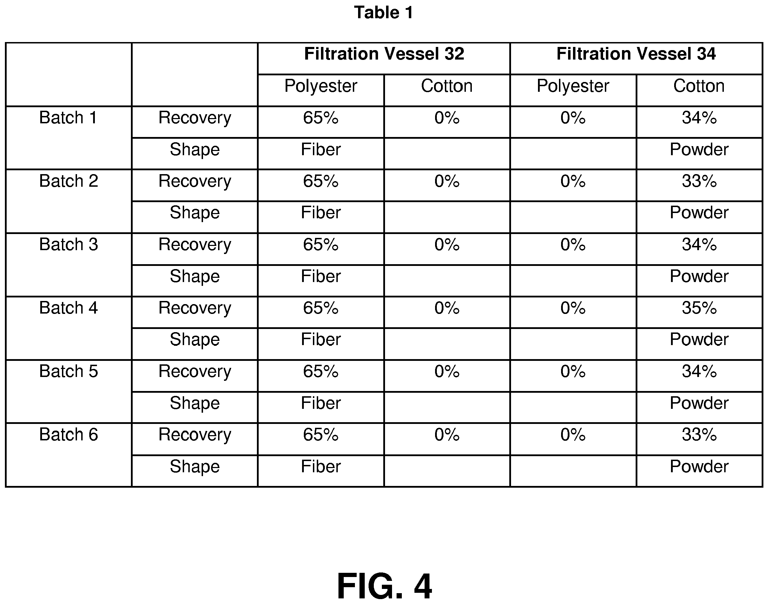

Table 1, depicted in FIG. **4****,** shows the recovered fiber-shaped fibers and fine-powder shaped fibers. The data confirm that fibers in fiber form are polyester only and that almost all the recovered fibers in fine powder form are cotton.

### Example 2

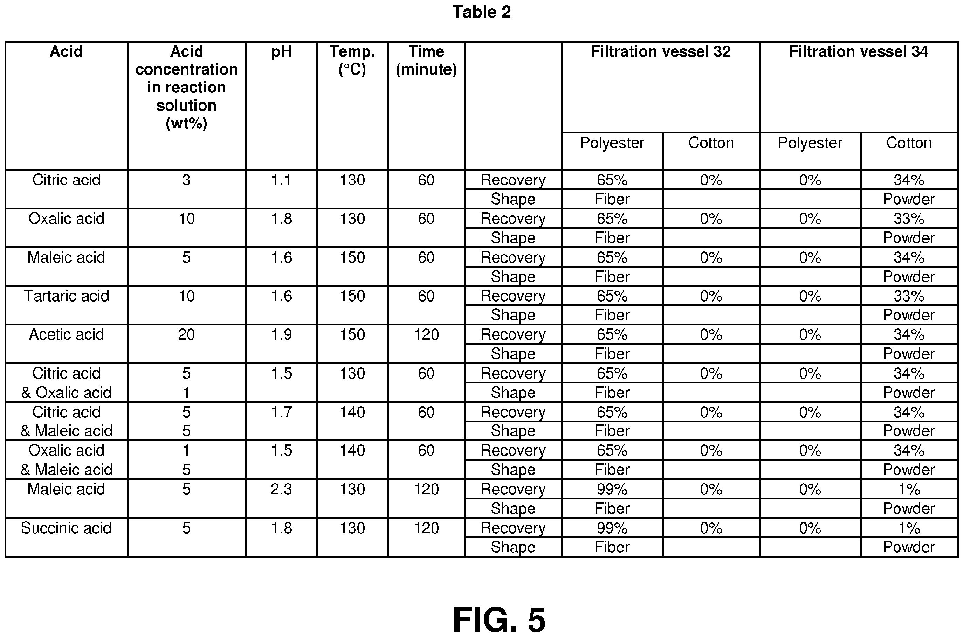

This example is concerned with the use of different organic acids in recovering the fibers. The subcritical water reactor of FIG. **3****,** as used in Example 1, is considered. Table 2, depicted in FIG. **5****,** shows the percentage values of recovered polyester and cotton against different types and concentrations of organic acids. Regarding the fiber material used for the reaction, clothing consisting of blended yarns of 65% polyester and 35% cotton was used. As shown in Table 2, as in the absence of acid, reaction did not proceed in the presence of succinic acid and malic acid, and cotton fibers or fine powders were not found in the solution. However, in the presence of oxalic acid, citric acid, maleic acid, tartaric acid, acetic acid and a mixture thereof, the decomposition reaction of cotton proceeded, and only the polyester fiber could be recovered in fiber form. In addition, the pH value of the reaction solution, measured at room temperature, was 3 or less.

### Example 3

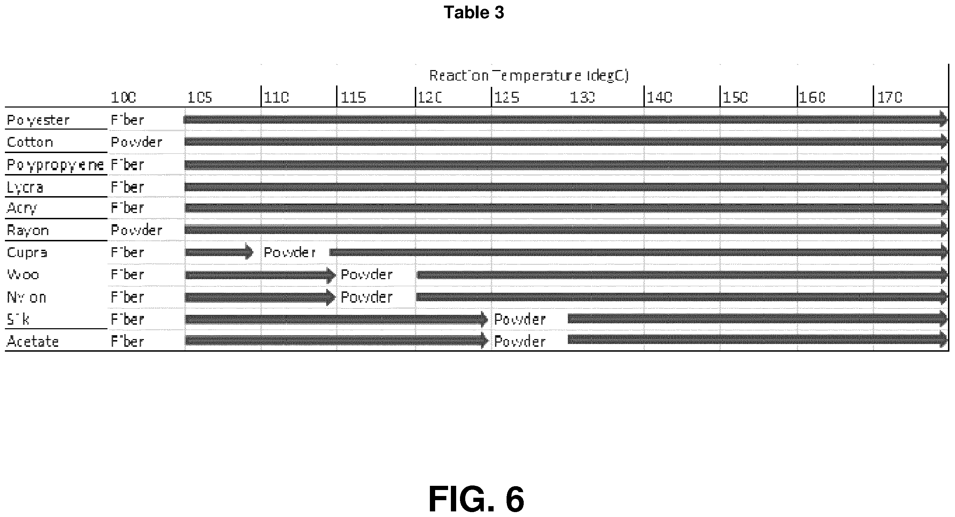

Using the subcritical water reactor of FIG. **3** as in Example 1, various types of fibers were reacted, and the reaction products were examined. The results are shown in Table 3, depicted in FIG. **6****.**

The fiber materials used for the reaction were polyester, cotton, polypropylene, lycra, acrylic, rayon, cupra, wool, nylon, silk, and acetate. The reaction condition was 5% aqueous oxalic acid solution and the reaction time was 1 hour. As shown in Table 3, when hydrolysis was conducted at a temperature higher than 100°C, polyester, polypropylene, lycra and acrylic could be recovered while maintaining the fiber shape.

When the reaction temperature was set to 110°C or less, cotton and rayon could be dissolved and/or decomposed into fine powder form. When the reaction temperature was set at 115°C or higher, cotton, wool, nylon, rayon and cupra could be dissolved and/or decomposed into fine powder. If the reaction temperature was 125°C or higher, cotton, wool, nylon, silk, rayon, cupra and acetate could be dissolved and/or decomposed into a fine powder form.

The present disclosure may be embodied in other specific forms without departing from the spirit or essential characteristics thereof. The present embodiment is therefore to be considered in all respects as illustrative and not restrictive. The scope of the invention is indicated by the appended claims rather than by the foregoing description, and all changes that come within the meaning and range of equivalency of the claims are therefore intended to be embraced therein.

### INDUSTRIAL APPLICABILITY

Fiber waste usually contains large solids, which are environmentally unfriendly for disposal. Examples of such fiber waste include cloths, clothing and/or textiles etc. discarded as pre-consumer or post-consumer waste. It is desirable to recycle and reuse such fiber waste. Conventionally, when decomposing and separating clothing and the like that contains a mixture of various fiber materials, there has been hardly any method capable of achieving high energy efficiency and economic viability.

By the method and system disclosed in the present disclosure, collection and recycling of clothing related to practical use and decomposition and sorting of fiber raw materials become possible. The recovered fibrous materials can be directly used as raw materials in a garment-making process such as a spinning process.

In reacting fibers such as clothing and the like with subcritical water, by the present disclosure it becomes possible to construct a plant with a small space requirement and a low facility cost. It can furthermore lead to a low running cost and produce high-quality, high-price sellable products on a business basis.

## Claims

1. A method for recovering fibers from fibrous products comprising the steps of:
providing a reaction solution comprising water for hydrolyzing the fibrous products;
dividing the fibrous products into a plurality of batches, each batch consisting of a portion of the fibrous products; and
processing the plurality of batches to recover the fibers, comprising the steps of:
in a first reactor selected from a plurality of hydrothermal reactors to deposit the reaction solution and an individual batch, pressurizing the reaction solution and maintaining a temperature thereof at a temperature predetermined to form a superheated reaction solution that contains subcritical water, whereby the individual batch is hydrolyzed to yield a collection of recovered fibers;
separating the collection of recovered fibers from the superheated reaction solution by filtering, whereby the superheated reaction solution is recovered; and
in a next reactor selected from the plurality of hydrothermal reactors to deposit a next batch selected from the plurality of batches where the next reactor is different from the first reactor and the next batch has not been hydrolyzed, transferring the recovered superheated reaction solution to the next reactor for recycling the superheated reaction solution in hydrolyzing the next batch.

2. The method of claim 1, wherein:
the collection of recovered fibers comprises a first collection of recovered fibers in fiber form and a second collection of recovered fibers in powder form; and
in the step of separating the collection of recovered fibers from the superheated reaction solution, the first and second collections of recovered fibers are further separated by a first stage of coarse filtering followed by a second stage of fine filtering.

3. The method of claim 1, wherein the next reactor is pressurized when the recovered superheated reaction solution is transferred thereto, and wherein the step of processing the plurality of batches further comprises the step of:
depositing the next batch into the next reactor under atmospheric pressure before the recovered superheated reaction solution is transferred to the next reactor that is pressurized.

4. The method of claim 3, wherein the step of processing the plurality of batches further comprises the step of:
shredding the next batch before the next batch is deposited into the next reactor.

5. The method of claim 1, wherein the reaction solution has a pH value of 3 or less, the pH value being measured when the reaction solution is at room temperature.

6. The method of claim 1, wherein the reaction solution further comprises one or more organic acids for promoting hydrolysis of the fibrous products.

7. The method of claim 6, wherein the one or more organic acids is selected from citric acid, oxalic acid, tartaric acid, maleic acid and acetic acid.

8. The method of any of claims 1-7, wherein the predetermined temperature is in a range of 100°C and 200°C.

9. The method of any of claims 1-7, wherein the predetermined temperature is in a range of 100°C and 110°C.

10. The method of any of claims 1-7, wherein the predetermined temperature is selected to be 115°C or higher.

11. The method of any of claims 1-7, wherein the predetermined temperature is selected to be 125°C or higher.

12. A system for recovering fibers from fibrous products comprising:
a plurality of hydrothermal reactors collectively for hydrolyzing the fibrous products to recover the fibers, wherein an individual hydrothermal reactor is configured to pressurize a reaction solution containing water and to maintain a temperature of the reaction solution at a predetermined temperature for forming a superheated reaction solution that comprises subcritical water for hydrolyzing a portion of the fibrous products deposited in the individual hydrothermal reactor to thereby form a collection of recovered fibers;
a filtering subsystem comprising one or more filters for separating the collection of recovered fibers from the superheated reaction solution by filtering, whereby the superheated reaction solution is recovered;
a fluid subsystem for carrying a liquid to and from the filtering subsystem and to and from the individual hydrothermal reactor, the liquid being the superheated reaction solution or a mixture of the superheated reaction solution and the collection of recovered fibers, the fluid subsystem comprising:
(a) a network of pipes connectable to the filtering subsystem and the individual hydrothermal reactor for carrying the liquid;
(b) one or more valves for dynamically establishing one or more routes in the network; and
(c) one or more pumps for pumping the liquid through an individual route;
and
a computer control subsystem comprising one or more computers for determining the one or more routes and for controlling the plurality of hydrothermal reactors and the fluid subsystem, wherein the one or more computers are arranged and programmed to configure the fluid subsystem to transfer the recovered superheated reaction solution previously used for hydrolyzing one portion of the fibrous products in a first hydrothermal reactor to a second hydrothermal reactor different from the first hydrothermal reactor for recycling the superheated reaction solution in hydrolyzing another portion of the fibrous products, wherein the first and second hydrothermal reactors are selected from the plurality of hydrothermal reactors.

13. The system of claim 12, wherein the plurality of hydrothermal reactors consists of two reactors.

14. The system of claim 12 or 13, wherein:
the collection of recovered fibers comprises a first collection of recovered fibers in fiber form and a second collection of recovered fibers in powder form; and
the one or more filters include a serial cascade of a first-stage filter and a second-stage filter, the first-stage filter being configured to filter out the first collection of recovered fibers while allowing the second collection of recovered fibers to pass, the second-stage filter being configured to filter out the second collection of recovered fibers.

15. The system of claim 14, wherein:
the one or more computers are further arranged and programmed to organize the one or more routes as a circuit for circulating the mixture between the filtering subsystem and the individual hydrothermal reactor so as to filter out the first and second collections of recovered fibers from the mixture.

## Patentansprüche

1. Verfahren zur Rückgewinnung von Fasern aus fasrigen Produkten, umfassend die Schritte:
Bereitstellen einer Reaktionslösung umfassend Wasser zum Hydrolysieren der fasrigen Produkte;
Aufteilen der fasrigen Produkte in eine Mehrzahl von Chargen, wobei jede Charge aus einem Teil der fasrigen Produkte besteht; und
Verarbeiten der Mehrzahl von Chargen, um die Fasern rückzugewinnen, umfassend die Schritte:
in einem ersten Reaktor, ausgewählt aus einer Mehrzahl von hydrothermalen Reaktoren, um die Reaktionslösung und eine einzelne Charge abzusetzen, Unterdrucksetzen der Reaktionslösung und Halten einer Temperatur davon auf einer vorbestimmten Temperatur, um eine überhitzte Reaktionslösung zu bilden, die unterkritisches Wasser enthält, wobei die einzelne Charge hydrolysiert wird, um eine Sammlung von rückgewonnenen Fasern zu ergeben;
Abtrennen der Sammlung rückgewonnener Fasern von der überhitzten Reaktionslösung durch Filtrieren, wodurch die überhitzte Reaktionslösung rückgewonnen wird; und
in einem nächsten Reaktor, ausgewählt aus der Mehrzahl von hydrothermalen Reaktoren, um eine nächste Charge, ausgewählt aus der Mehrzahl von Chargen, abzusetzen, wobei der nächste Reaktor sich von dem ersten Reaktor unterscheidet und die nächste Charge nicht hydrolysiert wurde, Überführen der rückgewonnenen überhitzten Reaktionslösung in den nächsten Reaktor zum Recyceln der überhitzten Reaktionslösung beim Hydrolysieren der nächsten Charge.

2. Verfahren nach Anspruch 1, wobei:
die Sammlung von rückgewonnenen Fasern eine erste Sammlung von rückgewonnenen Fasern in Faserform und eine zweite Sammlung von rückgewonnenen Fasern in Pulverform umfasst; und
im Schritt des Abtrennens der Sammlung von rückgewonnenen Fasern von der überhitzten Reaktionslösung die erste und zweite Sammlung von rückgewonnenen Fasern weiter durch eine erste Grobfiltrierungsstufe, gefolgt von einer zweiten Feinfiltrierungsstufe, getrennt werden.

3. Verfahren nach Anspruch 1, wobei der nächste Reaktor unter Druck gesetzt wird, wenn die rückgewonnene überhitzte Reaktionslösung dorthin überführt wird, und wobei der Schritt des Verarbeitens der Mehrzahl von Chargen ferner den Schritt umfasst:
Absetzen der nächsten Charge in den nächsten Reaktor unter Atmosphärendruck, bevor die rückgewonnene überhitzte Reaktionslösung in den nächsten Reaktor überführt wird, der unter Druck gesetzt wird.

4. Verfahren nach Anspruch 3, wobei der Schritt des Verarbeitens der Mehrzahl von Chargen ferner den Schritt umfasst:
Zerkleinern der nächsten Charge, bevor die nächste Charge in den nächsten Reaktor abgesetzt wird.

5. Verfahren nach Anspruch 1, wobei die Reaktionslösung einen pH-Wert von 3 oder weniger aufweist, wobei der pH-Wert gemessen wird, wenn die Reaktionslösung Raumtemperatur hat.

6. Verfahren nach Anspruch 1, wobei die Reaktionslösung ferner eine oder mehrere organische Säuren umfasst, um die Hydrolyse der fasrigen Produkte zu fördern.

7. Verfahren nach Anspruch 6, wobei die eine oder mehreren organischen Säuren aus Citronensäure, Oxalsäure, Weinsäure, Maleinsäure und Essigsäure ausgewählt wird.

8. Verfahren nach einem der Ansprüche 1-7, wobei die vorbestimmte Temperatur in einem Bereich von 100 °C und 200 °C liegt.

9. Verfahren nach einem der Ansprüche 1-7, wobei die vorbestimmte Temperatur in einem Bereich von 100 °C und 110 °C liegt.

10. Verfahren nach einem der Ansprüche 1-7, wobei die vorbestimmte Temperatur so ausgewählt wird, dass sie 115 °C oder höher beträgt.

11. Verfahren nach einem der Ansprüche 1-7, wobei die vorbestimmte Temperatur so ausgewählt wird, dass sie 125 °C oder höher beträgt.

12. System zur Rückgewinnung von Fasern aus fasrigen Produkten, umfassend:
eine Mehrzahl von hydrothermalen Reaktoren zum gemeinsamen Hydrolysieren der fasrigen Produkte, um die Fasern rückzugewinnen, wobei ein einzelner hydrothermaler Reaktor konfiguriert ist, um eine wasserhaltige Reaktionslösung unter Druck zu setzen und eine Temperatur der Reaktionslösung auf einer vorbestimmten Temperatur zu halten, um eine überhitzte Reaktionslösung zu bilden, die unterkritisches Wasser zum Hydrolysieren eines Teils der fasrigen Produkte umfasst, die in dem einzelnen hydrothermalen Reaktor abgesetzt wurden, um dadurch eine Sammlung von rückgewonnenen Fasern zu bilden;
ein Filtrierungs-Teilsystem umfassend einen oder mehrere Filter zum Trennen der Sammlung von rückgewonnenen Fasern von der überhitzten Reaktionslösung durch Filtern, wodurch die überhitzte Reaktionslösung rückgewonnen wird;
ein Fluid-Teilsystem zum Transportieren einer Flüssigkeit zu und von dem Filtrierungs-Teilsystem und zu und von dem einzelnen hydrothermalen Reaktor, wobei die Flüssigkeit die überhitzte Reaktionslösung oder eine Mischung aus der überhitzten Reaktionslösung und der Sammlung von rückgewonnenen Fasern ist, das Fluid-Teilsystem umfassend:
(a) ein Rohrnetz, das mit dem Filtrierungs-Teilsystem und dem einzelnen hydrothermalen Reaktor verbindbar ist, um die Flüssigkeit zu transportieren;
(b) ein oder mehrere Ventile zum dynamischen Einrichten einer oder mehrerer Routen im Netzwerk; und
(c) eine oder mehrere Pumpen zum Pumpen der Flüssigkeit durch eine individuelle Route;
und
ein Computersteuerungs-Teilsystem, umfassend einen oder mehrere Computer zum Bestimmen der einen oder der mehreren Routen und zum Steuern der mehreren hydrothermalen Reaktoren und des Fluid-Teilsystems, wobei der eine oder die mehreren Computer angeordnet und programmiert sind, um das Fluid-Teilsystem zu konfigurieren, um die rückgewonnene überhitzte Reaktionslösung zu überführen, die zuvor zum Hydrolysieren eines Teils der fasrigen Produkte in einem ersten hydrothermalen Reaktor zu einem zweiten hydrothermalen Reaktor verwendet wurde, der sich von dem ersten hydrothermalen Reaktor unterscheidet, um die überhitzte Reaktionslösung beim Hydrolysieren eines anderen Teils der fasrigen Produkte zu recyceln, wobei der erste und der zweite hydrothermale Reaktor aus der Mehrzahl von hydrothermalen Reaktoren ausgewählt ist.

13. System nach Anspruch 12, wobei die Mehrzahl von hydrothermalen Reaktoren aus zwei Reaktoren besteht.

14. System nach Anspruch 12 oder 13, wobei:
die Sammlung von rückgewonnenen Fasern eine erste Sammlung von rückgewonnenen Fasern in Faserform und eine zweite Sammlung von rückgewonnenen Fasern in Pulverform umfasst; und
der eine oder die mehreren Filter eine serielle Kaskade eines Erststufenfilters und eines Zweitstufenfilters einschließen, wobei der Erststufenfilter konfiguriert ist, um die erste Sammlung von rückgewonnenen Fasern herauszufiltern, während die zweite Sammlung von rückgewonnenen Fasern passieren kann, wobei der Zweitstufenfilter konfiguriert ist, um die zweite Sammlung von rückgewonnenen Fasern herauszufiltern.

15. System nach Anspruch 14, wobei:
der eine oder die mehreren Computer ferner angeordnet und programmiert sind, um die eine oder mehreren Routen als einen Kreislauf zum Zirkulieren der Mischung zwischen dem Filtrierungs-Teilsystem und dem einzelnen hydrothermalen Reaktor zu organisieren, um die erste und zweite Sammlung von rückgewonnenen Fasern aus der Mischung herauszufiltern.

## Revendications

1. Procédé de récupération de fibres à partir de produits fibreux comprenant les étapes consistant à :
fournir une solution réactionnelle comprenant de l'eau pour hydrolyser les produits fibreux ;
diviser les produits fibreux en une pluralité de lots, chaque lot étant constitué d'une partie des produits fibreux ; et
traiter la pluralité de lots pour récupérer les fibres, comprenant les étapes consistant à :
dans un premier réacteur choisi parmi une pluralité de réacteurs hydrothermiques pour déposer la solution réactionnelle et un lot individuel, mettre sous pression la solution réactionnelle et maintenir sa température à une température prédéterminée pour former une solution réactionnelle surchauffée qui contient de l'eau sous-critique, moyennant quoi le lot individuel est hydrolysé pour obtenir un ensemble de fibres récupérées ;
séparer l'ensemble de fibres récupérées de la solution réactionnelle surchauffée par filtration, moyennant quoi la solution réactionnelle surchauffée est récupérée ; et
dans un réacteur suivant choisi parmi la pluralité de réacteurs hydrothermiques pour déposer un lot suivant choisi parmi la pluralité de lots où le réacteur suivant est différent du premier réacteur et le lot suivant n'a pas été hydrolysé, transférer la solution réactionnelle surchauffée récupérée au réacteur suivant pour recycler la solution réactionnelle surchauffée dans l'hydrolyse du lot suivant.

2. Procédé selon la revendication 1, dans lequel :
l'ensemble de fibres récupérées comprend un premier ensemble de fibres récupérées sous forme de fibres et un second ensemble de fibres récupérées sous forme de poudre ; et
dans l'étape de séparation de l'ensemble de fibres récupérées de la solution réactionnelle surchauffée, les premier et second ensembles de fibres récupérées sont en outre séparés par un premier étage de filtration grossière suivi d'un second étage de filtration fine.

3. Procédé selon la revendication 1, dans lequel le réacteur suivant est mis sous pression lorsque la solution réactionnelle surchauffée récupérée y est transférée, et dans lequel l'étape de traitement de la pluralité de lots comprend en outre l'étape consistant à :
déposer le lot suivant dans le réacteur suivant sous pression atmosphérique avant que la solution réactionnelle surchauffée récupérée ne soit transférée dans le réacteur suivant qui est mis sous pression.

4. Procédé selon la revendication 3, dans lequel l'étape de traitement de la pluralité de lots comprend en outre l'étape consistant à :
déchiqueter le lot suivant avant que le lot suivant ne soit déposé dans le réacteur suivant.

5. Procédé selon la revendication 1, dans lequel la solution réactionnelle a une valeur de pH de 3 ou moins, la valeur de pH étant mesurée lorsque la solution réactionnelle est à température ambiante.

6. Procédé selon la revendication 1, dans lequel la solution réactionnelle comprend en outre un ou plusieurs acides organiques pour favoriser l'hydrolyse des produits fibreux.

7. Procédé selon la revendication 6, dans lequel le ou les acides organiques sont choisis parmi l'acide citrique, l'acide oxalique, l'acide tartrique, l'acide maléique et l'acide acétique.

8. Procédé selon l'une quelconque des revendications 1 à 7, dans lequel la température prédéterminée est dans une plage de 100 °C à 200 °C.

9. Procédé selon l'une quelconque des revendications 1 à 7, dans lequel la température prédéterminée est dans une plage de 100 °C à 110 °C.

10. Procédé selon l'une quelconque des revendications 1 à 7, dans lequel la température prédéterminée est choisie pour être de 115 °C ou plus.

11. Procédé selon l'une quelconque des revendications 1 à 7, dans lequel la température prédéterminée est choisie pour être de 125 °C ou plus.

12. Système de récupération de fibres à partir de produits fibreux comprenant :
une pluralité de réacteurs hydrothermiques collectivement pour hydrolyser les produits fibreux pour récupérer les fibres, dans lequel un réacteur hydrothermique individuel est configuré pour mettre sous pression une solution réactionnelle contenant de l'eau et pour maintenir une température de la solution réactionnelle à une température prédéterminée pour former une solution réactionnelle surchauffée qui comprend de l'eau sous-critique pour hydrolyser une partie des produits fibreux déposés dans le réacteur hydrothermique individuel pour former ainsi un ensemble de fibres récupérées ;
un sous-système de filtration comprenant un ou plusieurs filtres pour séparer l'ensemble de fibres récupérées de la solution réactionnelle surchauffée par filtration, moyennant quoi la solution réactionnelle surchauffée est récupérée ;
un sous-système de fluide pour acheminer un liquide vers et depuis le sous-système de filtration et vers et depuis le réacteur hydrothermique individuel, le liquide étant la solution réactionnelle surchauffée ou un mélange de la solution réactionnelle surchauffée et de l'ensemble de fibres récupérées, le sous-système de fluide comprenant :
(a) un réseau de canalisations raccordables au sous-système de filtration et au réacteur hydrothermique individuel pour acheminer le liquide ;
(b) une ou plusieurs vannes pour établir dynamiquement un ou plusieurs trajets dans le réseau ; et
(c) une ou plusieurs pompes pour pomper le liquide à travers un trajet individuel ;
et
un sous-système de commande informatique comprenant un ou plusieurs ordinateurs pour déterminer le ou les trajets et pour commander la pluralité de réacteurs hydrothermiques et le sous-système de fluide, dans lequel le ou les ordinateurs sont agencés et programmés pour configurer le sous-système de fluide pour transférer la solution réactionnelle surchauffée récupérée précédemment utilisée pour hydrolyser une partie des produits fibreux dans un premier réacteur hydrothermique vers un second réacteur hydrothermique différent du premier réacteur hydrothermique pour recycler la solution réactionnelle surchauffée dans l'hydrolyse d'une autre partie des produits fibreux, dans lequel les premier et second réacteurs hydrothermiques sont choisis parmi la pluralité de réacteurs hydrothermiques.

13. Système selon la revendication 12, dans lequel la pluralité de réacteurs hydrothermiques consiste en deux réacteurs.

14. Système selon la revendication 12 ou 13, dans lequel :
l'ensemble de fibres récupérées comprend un premier ensemble de fibres récupérées sous forme de fibres et un second ensemble de fibres récupérées sous forme de poudre ; et
le ou les filtres comprennent une cascade en série d'un filtre de premier étage et d'un filtre de second étage, le filtre de premier étage étant configuré pour filtrer le premier ensemble de fibres récupérées tout en laissant passer le second ensemble de fibres récupérées, le filtre de second étage étant configuré pour filtrer le second ensemble de fibres récupérées.

15. Système selon la revendication 14, dans lequel :
le ou les ordinateurs sont en outre agencés et programmés pour organiser le ou les trajets en circuit de circulation du mélange entre le sous-système de filtration et le réacteur hydrothermique individuel de manière à filtrer les premier et second ensembles de fibres récupérées du mélange.
